Europäisches Patentamt

European Patent Office

Office européen des brevets

(19)

(11) EP 0 698 783 A1

(12) EUROPÄISCHE PATENTANMELDUNG

(43) Veröffentlichungstag:
28.02.1996 Patentblatt 1996/09

(51) Int. Cl.⁶: G01F 1/84

(21) Anmeldenummer: 94112759.9

(22) Anmeldetag: 16.08.1994

(84) Benannte Vertragsstaaten:
CH DE DK ES FR GB IT LI NL

(71) Anmelder: Endress + Hauser Flowtec AG
CH-4153 Reinach BL 1 (CH)

(72) Erfinder: Keel, Guido
CH-4058 Basel, BS (CH)

(74) Vertreter: Morstadt, Volker, Dipl.-Ing.
c/o Endress + Hauser Flowtec AG
CH-4153 Reinach BL 1 (CH)

(54) **Auswerte-Elektronik eines Coriolis-Massedurchflussaufnehmers**

(57)     Zur Erzielung einer Meßgenauigkeit von mindestens 0,005% des Meßbereichsendwerts und von mindestens 0,15% des Meßwerts umfaßt diese Auswerte-Elektronik eines nach dem Coriolis-Prinzip arbeitenden Massedurchflußaufnehmers mit elektrodynamischen Sensoren (21, 22): Zwei Vorverstärker (31, 32) für die Signale der Sensoren; einen Verstärker (41) mit fest eingestellter Verstärkung und einen Verstärker (42) mit variabler Verstärkung für die Ausgangssignale der beiden Vorverstärker (31, 32); eine Differenzstufe (13) für die Ausgangssignale der Verstärker (41, 42); einen Umschalter (14), dessen erster Eingang an der Differenzstufe (13) und dessen zweiter Eingang am Verstärkers (41) liegt; ein Tiefpaßfilter (15) mit einstellbarer Grenzfrequenz, das am Umschalter (14) liegt; eine Summier/Integrierstufe (16) für die Signale der Vorverstärker (31, 32); eine mit der Summier/Integrierstufe (16) verbundene Phasenregelschleife (17), die ein Signal ($f_1$) abgibt; eine Phasenmeß- und Phasenaddierstufe (18), der das Signal ($f_1$) und das Signal des Tiefpaßfilters (15) zugeführt ist und die ein um die Phasenverschiebung ($\delta\phi$) des Tiefpaßfilters (15) verschobenes Signal ($f_2$) sowie ein um $\delta\phi$ plus 90° verschobenes Signal ($f_3$) abgibt; einen vom Signal ($f_2$) getakteten, am Ausgang des Tiefpaßfilters (15) liegenden Synchrongleichrichter (51) mit nachgeschaltetem Schalter (20); eine Einstellstufe (19) der Verstärkung des Verstärkers (42), die über einen Integrator (61) am Schalter (20) liegt; eine Ablaufsteuerung (23), die während einer Schließdauer ($t_s$) den Schalter (20) bzw. den Ausgang des Umschalters (14) zur Differenzstufe (13) außer während einer dazu kurzen Meßdauer ($t_m$) durchgeschaltet hält, während der die Phasenmessung der Phasenmeß- und Phasenaddierstufe (18) aktiviert ist; einen während der Meßdauer ($t_m$) vom Signal ($f_2$) bzw. während der Schließdauer ($t_s$) vom Signal ($f_3$) getakteten, am Tiefpaßfilter (15) liegenden Synchrongleichrichter (52) mit nachgeschaltetem Integrator (62); eine Speicherstufe (25), die während der Meßdauer ($t_m$) am Integrator (62) liegt; und eine Dividierstufe (26), deren Dividend-Eingang am Integrator (62), deren einer Divisor-Eingang an der Speicherstufe (25) und deren anderer Divisor-Eingang an der Phasenregelschleife (17) während der Schließdauer ($t_s$) liegt und die ein dem Massedurchfluß (m) proportionales Signal abgibt.

**Beschreibung**

Die Erfindung betrifft eine Auswerte-Elektronik eines Coriolis-Massedurchflußaufnehmers mit elektrodynamischen Sensoren.

In der Zeitschrift "Automatisierungstechnische Praxis - atp", 1988, Seiten 224 bis 230 ist die Auswerte-Elektronik eines nach dem Coriolis-Prinzip arbeitenden, von der Anmelderin hergestellten Massedurchflußaufnehmers beschrieben. Dieser hat ein auf einer Schwingfrequenz schwingendes erstes Meßrohr und ein auf derselben Schwingfrequenz schwingendes zweites Meßrohr, durch welche Meßrohre ein zu messendes Fluid strömt und an welchen Meßrohren ein erster opto-elektronischer Sensor und ein zweiter opto-elektronischer Sensor in Richtung der Strömung des Fluids versetzt angeordnet sind, welche Auswerte-Elektronik umfaßt:

- pro opto-elektronischen Sensor eine Leuchtdiode und eine Photodiode,
- eine Differenzstufe für die Ausgangsströme der beiden Sensoren,
- einen Verstärker, der der Differenzstufe nachgeschaltet ist,
- eine Einstellstufe,

  -- deren Eingang mit dem Ausgang des Verstärkers verbunden ist,
  -- deren Ausgang über einen Schalter mit der Photodiode des zweiten Sensors verbunden ist und
  -- mittels der die Amplitude des Ausgangsstroms des zweiten Sensors gleich der Amplitude des Ausgangsstroms des ersten Sensors eingestellt wird,

- eine Ablaufsteuerung, die während einer Schließdauer den Schalter außer während einer Meßdauer durchgeschaltet hält,
- eine Amplitudenmeßstufe, deren Eingang mit dem Ausgang der Differenzstufe verbunden ist,
- eine Speicherstufe, deren Eingang mindestens während der Meßdauer mit dem Ausgang der Amplitudenmeßstufe verbunden ist, und
- eine Prozessorstufe, deren Ausgangssignal dem Massedurchfluß proportional ist.

In der Zeitschrift "Measurement & Control", Sept. 1988, Seiten 195 bis 197 ist andererseits eine Auswerte-Elektronik eines nach dem Coriolis-Prinzip arbeitenden Massedurchflußaufnehmers mit einem auf einer Schwingfrequenz schwingenden ersten Meßrohr und mit einem auf derselben Schwingfrequenz schwingenden zweiten Meßrohr beschrieben, durch welche Meßrohre ein zu messendes Fluid strömt und an mindestens einem von welchen Meßrohren ein erster elektrodynamischer Sensor und ein zweiter elektrodynamischer Sensor in Richtung der Strömung des Fluids versetzt angeordnet sind, welche Auswerte-Elektronik umfaßt:

- einen ersten Verstärker mit fest eingestellter Verstärkung für das Signal des ersten Sensors,
- einen zweiten Verstärker mit variabler Verstärkung für das Signal des zweiten Sensors,
- einen Differenzverstärker für die Ausgangssignale der beiden Verstärker,
- ein dem Differenzverstärker nachgeschaltetes aktives Filter, das der Beseitigung von Meßfehlern dient, die durch Schwankungen der Dichte des Fluids, durch die Schwingfrequenz selbst und durch die Erregung der Meßrohre bedingt sind,
- einen Summierverstärker für die Ausgangssignale der beiden Vorverstärker,
- einen ersten auf der Schwingfrequenz eingerasteten Lock-in-Verstärker am Ausgang des aktiven Filters,
- einen zweiten auf der Schwingfrequenz eingerasteten Lock-in-Verstärker am Ausgang des Summierverstärkers,
- einen ersten bzw. einen zweiten Spannungs-Frequenzwandler am Ausgang des ersten bzw. des zweiten Lock-in-Verstärkers,
- einen ersten bzw. einen zweiten Zähler am Ausgang des ersten bzw. des zweiten Spannungs-Frequenzwandlers,
- eine Dividierstufe, und

  -- deren Dividend-Eingang mit dem Ausgang des ersten Spannungs-Frequenzwandlers,
  -- deren Divisor-Eingang mit dem Ausgang des zweiten Spannungs-Frequenzwandlers verbunden ist und
  -- deren Ausgangssignal dem Massedurchfluß proportional ist.

Ein Ziel der Erfindung ist es, eine verbesserte Auswerte-Elektronik für Coriolis-Massedurchflußaufnehmer mit elektrodynamischen Sensoren anzugeben, so daß mindestens eine Meßgenauigkeit von 0,005% des Meßbereichsendwerts (z.B. bei einer Geschwindigkeit des Fluids von 10 m/s) und eine Meßgenauigkeit von 0,15% des Meßwerts erreichbar ist. Diese Werte bedeuten auch, daß noch eine Fluid-Geschwindigkeit von 0,5 mm/s meßbar sein muß. Dabei liegt die zu messende Phasenverschiebung zwischen den Signalen der beiden elektrodynamischen Sensoren zwischen ca.

$4 \cdot 10^{-5}$° und ca. 0,5° bei Werten der Schwingfrequenz zwischen ca. 500 Hz und ca. 1 kHz. Die Phasenmessung muß daher mit einer Auflösung von ca. $2 \cdot 10^{-10}$ s erfolgen.

Die Erfindung besteht daher in einer Auswerte-Elektronik eines nach dem Coriolis-Prinzip arbeitenden Massedurchflußaufnehmers mit einem auf einer Schwingfrequenz schwingenden ersten Meßrohr und mit einem auf derselben Schwingfrequenz schwingenden zweiten Meßrohr, durch welche Meßrohre ein zu messendes Fluid strömt und an mindestens einem von welchen Meßrohren ein erster elektrodynamischer Sensor und ein zweiter elektrodynamischer Sensor in Richtung der Strömung des Fluids versetzt angeordnet sind, welche Auswerte-Elektronik umfaßt:

- einen ersten Vorverstärker für das Signal des ersten Sensors,
- einen zweiten Vorverstärker für das Signal des zweiten Sensors,
- einen ersten Verstärker mit fest eingestellter Verstärkung für das Ausgangssignal des ersten Vorverstärkers,
- einen zweiten Verstärker mit variabler Verstärkung für das Ausgangssignal des zweiten Vorverstärkers,
- eine Differenzstufe für die Ausgangssignale der beiden Verstärker,
- einen ersten Umschalter,

    -- dessen erster Eingang am Ausgang der Differenzstufe und
    -- dessen zweiter Eingang am Ausgang des ersten Verstärkers liegt,

- ein Tiefpaßfilter mit einstellbarer Grenzfrequenz,

    -- dessen Abfall seines Übertragungsfaktors bei der Schwingfrequenz der Meßrohre beginnt und
    -- dessen Eingang am Ausgang des ersten Umschalters liegt,

- eine Summier/Integrierstufe für die Ausgangssignale der beiden Vorverstärker,
- eine Phasenregelschleife,

    -- deren Eingang mit dem Ausgang der Summier/Integrierstufe verbunden und
    -- deren Ausgangssignal ein erstes Schwingfrequenz-Signal ist,

- eine Phasenmeß- und Phasenaddierstufe,

    -- deren erstem Eingang das erste Schwingfrequenz-Signal und
    -- deren zweitem Eingang das Ausgangssignal des Tiefpaßfilters zugeführt ist sowie
    -- an dessen erstem Ausgang ein um die Phasenverschiebung des Tiefpaßfilters verschobenes zweites Schwingfrequenz-Signal und
    -- an dessen zweitem Ausgang ein um diese Phasenverschiebung plus 90° verschobenes drittes Schwingfrequenz-Signal auftritt,

- einen vom zweiten Schwingfrequenz-Signal getakteten ersten Synchrongleichrichter, dem das Ausgangssignals des Tiefpaßfilters zugeführt ist,
- einen Schalter, dessen Eingang am Ausgang des ersten Synchrongleichrichters liegt,
- eine Einstellstufe der Verstärkung des zweiten Verstärkers, deren Eingang über einen ersten Integrator mit dem Ausgang des Schalters verbunden ist,
- eine Ablaufsteuerung, die während einer Schließdauer den Schalter bzw. den Ausgang des Umschalters mit dessen erstem Eingang außer während einer im Vergleich zur Schließdauer kurzen Meßdauer durchgeschaltet hält und während der Meßdauer die Phasenmessung der Phasenmeß- und Phasenaddierstufe aktiviert,
- einen während der Meßdauer vom zweiten bzw. während der Schließdauer vom dritten Schwingfrequenz-Signal getakteten zweiten Synchrongleichrichter, dem das Ausgangssignals des Tiefpaßfilters zugeführt ist,
- einen zweiten Integrator, dessen Eingang mit dem Ausgang des zweiten Synchrongleichrichters verbunden ist,
- eine Speicherstufe, deren Eingang höchstens während der Meßdauer mit dem Ausgang des zweiten Integrators verbunden ist, und
- eine Dividierstufe,

    -- bei der während der Schließdauer

      --- der Dividend-Eingang mit dem Ausgang des zweiten Integrators,
      --- der erste Divisor-Eingang mit dem Ausgang der Speicherstufe und
      --- der zweite Divisor-Eingang mit dem Ausgang der Phasenregelschleife verbunden ist und

-- deren Ausgangssignal dem Massedurchfluß proportional ist.

Nach einer vorteilhaften Ausgestaltung der Erfindung ist das Tiefpaßfilter ein Switched-Capacitor-Filter, dessen Taktsignal von der Phasenregelschleife erzeugt ist und dessen Taktfrequenz ein ganzzahliges Vielfaches der Schwingfrequenz ist.

In Weiterbildung der Erfindung kann eine Meßstufe der Dichte des Fluids vorgesehen sein, deren Eingang das erste oder das zweite Schwingfrequenz-Signal zugeführt ist.

In Ausgestaltung der Erfindung können ferner dem Ausgang des zweiten Synchrongleichrichters ein Analog/Digital-Wandler direkt nachgeschaltet und die Amplitudenmeßstufe, die Speicherstufe und die Dividierstufe Digitalschaltungen sein.

Die Erfindung wird nun anhand der einzigen Figur der Zeichnung näher erläutert, in der schematisch nach Art eines Blockschaltbilds ein Ausführungsbeispiel der Erfindung gezeigt ist.

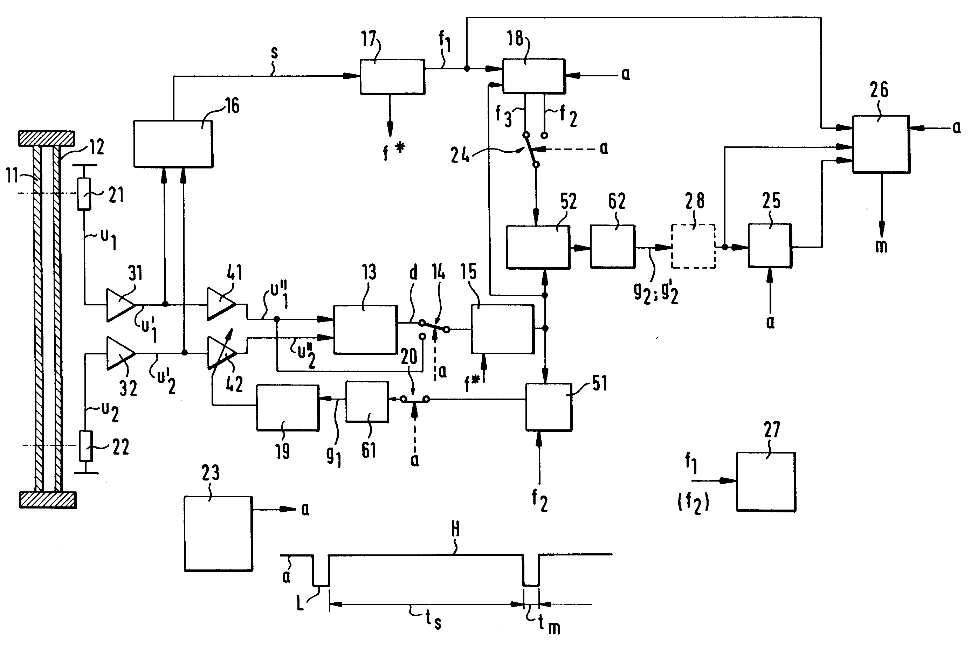

Die in Fig. 1 blockschaltbildmäßig gezeigte Auswerte-Elektronik ist für einen nach dem Coriolis-Prinzip arbeitenden Massedurchflußaufnehmer bestimmt, von dem als dessen für die Funktion wesentlichen Bestandteilen ein auf einer Schwingfrequenz schwingendes erstes Meßrohr 11 und ein auf derselben Schwingfrequenz schwingendes zweites Meßrohr 12 schematisch gezeigt sind. Diese Gleichheit der Schwingfrequenzen bedingt, daß die mechanischen Abmessungen und Eigenschaften der Meßrohre möglichst identisch sind. Da die beiden Meßrohre 11, 12 in den Verlauf einer nicht dargestellten Rohrleitung, z.B. mittels Flanschen oder Schraubanschlüssen, eingesetzt sind, werden sie im Betriebszustand von einem zu messenden Fluid, z.B Wasser, Milch, Öl etc.), vorzugsweise parallel, durchströmt.

Die Meßrohre 11, 12 werden von einer ebenfalls nicht dargestellten Treiberschaltung so erregt, daß sie immer mit ihrer von den Fluid-Eigenschaften (insb. Masse und Dichte) abhängigen Resonanzfrequenz als Schwingfrequenz f in Gegenphase oszillieren. Die Treiberschaltung kann z.B. als phasenverriegelte Schleife aufgebaut sein, so daß sich die momentane Resonanzfrequenz automatisch einstellt, wie dies in der US-A 48 01 897 der Anmelderin beschrieben ist.

Am Meßrohr 12 ist ein erster elektrodynamischer Sensor 21 und ein zweiter elektrodynamischer Sensor 22 in Richtung der Strömung des Fluids versetzt angeordnet. Die Sensoren können auch so angeordnet sein, daß sie die Schwingungen an gleichen Stellen beider Meßrohre 11, 12 aufnehmen. Jeder Sensor besteht aus einem Dauermagnet und einer Spule, die sich relativ zueinander aufgrund der Schwingungen bewegen.

Jeder Sensor gibt daher eine der Geschwindigkeit des Meßrohrs proportionale Wechselspannung $u = U \cdot \sin\Omega t$ ab, deren Amplitude U der Amplitude der Meßrohr-Schwingung proportional und deren Frequenz 1/t gleich der Frequenz f der Meßrohr-Schwingung ist, wobei $\Omega = 2\pi f$ ist.

Im Betrieb bei strömendem Fluid ist die Wechselspannung $u_1$ des Sensors 11 gegen die Wechselspannung $u_2$ des Sensors 12 um eine Phase $\phi$ verschoben; es gilt daher unter der Annahme, daß die Sensoren 11, 12 in der gleichen Distanz vor bzw. hinter der Mitte des Meßrohrs 12 angeordnet sind, wobei die Phase $\phi = 0$ dieser Mitte zugeordnet ist:

$$u_1 = U_1 \cdot \sin(\Omega t - \phi/2) \qquad\qquad (1)$$

$$u_2 = U_2 \cdot \sin(\Omega t + \phi/2) \qquad\qquad (2)$$

Das jeweilige Signal $u_1$ bzw. $u_2$ des ersten bzw. des zweiten Sensors 21, 22 ist einem ersten bzw. einem zweiten Vorverstärker 31, 32 zugeführt. Diese Vorverstärker haben jeweils einen großen Eingangswiderstand, so daß in den Sensoren praktisch kein Strom fließt, der auf die Meßrohre als mechanische Vorspannung einwirken und somit deren Schwingverhalten ungünstig beeinflussen könnte. Auch ändern die Vorverstärker die gegenseitige Phasenlage der Sensorsignale nicht.

Das Ausgangssignal $u'_1 = U'_1 \cdot \sin(\Omega t - \phi/2)$ des ersten Vorverstärkers 31 ist einem ersten Verstärker 41 mit fest eingestellter Verstärkung und das Ausgangssignal $u'_2 = U'_2 \cdot \sin(\Omega t + \phi/2)$ des zweiten Vorverstärkers einem zweiten Verstärker 42 mit variabler Verstärkung zugeführt. Die Signale $u'_1$, $u'_2$ können um maximal ± 10% voneinander abweichen.

Die variable Verstärkung des zweiten Verstärkers 42 wird automatisch so eingestellt, daß die Amplituden $U''_1$, $U''_2$ der Ausgangssignale $u''_1$, $u''_2$ der beiden Verstärker 41, 42 gleich sind: $U''_1 = U''_2 = U''$ ; Die Einstellung der variablen Verstärkung wird weiter unten noch erläutert. Als Verstärker 41, 42 werden bevorzugt sogenannte Current-Feedback-Operationsverstärker verwendet, deren Bandbreite unabhängig von der momentanen Verstärkung ist. Das jeweilige Ausgangssignal $U'' \cdot \sin(\Omega - \phi/2)t$ bzw. $U'' \cdot \sin(\Omega + \phi/2)t$ der beiden Verstärker 41, 42 ist dem Minuend- bzw. dem Subtrahend-Eingang einer Differenzstufe 13 zugeführt. An deren Ausgang entsteht daher ein Differenzsignal d:

$$d = U'' \cdot \sin(\Omega + \phi/2)t - U'' \cdot \sin(\Omega - \phi/2)t \qquad\qquad (3)$$

$$d = U'' \cdot [\sin(\phi/2) \cdot \cos\Omega t + \cos(\phi/2) \cdot \sin\Omega t + \sin(\phi/2) \cdot \cos\Omega t - \cos(\phi/2) \cdot \sin\Omega t]$$
$$d = 2U'' \cdot \sin(\phi/2)\cos\Omega t.$$
$$(4)$$

Da ferner für sehr kleine Winkel $\phi$ wie hier immer gilt:

$$\sin\phi \approx \phi,$$

ergibt sich:

$$d \approx 2U'''\cdot(\phi/2)\cdot\cos\Omega t = U'''\cdot\phi\cdot\cos\Omega t. \qquad (5)$$

Es ist ersichtlich, daß die Amplitude $U'''\phi$ des Differenzsignals d lediglich proportional zur Phase $\phi$ ist (da $U''$ konstant geregelt ist) und daß dessen Phase gegenüber jedem der Sensorsignale $u_1$, $u_2$ um praktisch 90° verschoben ist, da, wie vorausgesetzt, $\phi$ sehr klein ist. Für den Massefluß m gilt schließlich:

$$m \cong \phi/\Omega \qquad (6)$$

Am Ausgang der Differenzstufe 13, die das Differenzsignal auch noch verstärken kann, liegt der erste Eingang eines ersten Umschalters 14, dessen zweiter Eingang am Ausgang des ersten Verstärkers 41 angeschlossen ist. Somit kann zum Ausgang des ersten Umschalters 14 entweder das Differenzsignal d oder das Signal $u''_1$ durchgeschaltet werden.

Der Eingang eines Tiefpaßfilters 15 mit einstellbarer Grenzfrequenz liegt am Ausgang des ersten Umschalters 14. Vorzugsweise wird es in Switched-Capacitor-Technik realisiert und ist mindestens von vierter Ordnung. In diesem Fall ist dem Switched-Capacitor-Tiefpaßfilter ein Anti-Aliasing-Filter vorzuschalten und ein Smoothing-Filter nachzuschalten.

Switched-Capacitor-Filter sind bekanntlich getaktete Filter; deshalb ist die Taktfrequenz f* des getakteten Tiefpaßfilters 15 ein ganzzahliges Vielfaches der Schwingfrequenz f. Durch diese "Anbindung" der Taktfrequenz f* an die Schwingfrequenz f wird erreicht, daß auch die Grenzfrequenz des getakteten Tiefpaßfilters 15 mit der Schwingfrequenz f starr gekoppelt ist und sich mit dieser ändert.

Der Abfall des Übertragungsfaktors des Tiefpaßfilters 15 beginnt bei der Schwingfrequenz f der Meßrohre und ist ausreichend steil, damit Störsignale, die aus der Rohrleitung (Vibrationen, die z.B.von Schlägen auf die Rohrleitung herrühren) oder aus dem strömenden Fluid (Kavitationen) stammen, optimal unterdrückt werden können.

Die Ausgangssignale $u'_1$, $u'_2$ der beiden Vorverstärker 31, 32 sind einer Summier/Integrierstufe 16 zugeführt, an deren Ausgang somit ein Signal s wie folgt entsteht:

$$s = u'_1 + u'_2 = U'_1\cdot\sin(\Omega t - \phi/2) + U'_2\cdot\sin(\Omega t + \phi/2) \qquad 7)$$

$$s = \int U'\cdot(\sin\Omega t)dt = - (U'/\Omega)\cdot\cos\Omega t$$

wobei $U' \approx U'_1 + U'_2$ ist. Das Signal s hat also die Phase der Mitte des Meßrohrs 12 und dessen Schwingfrequenz f.

Am Ausgang der Summier/Integrierstufe 16 liegt der Frequenz-Eingang einer Phasenregelschleife 17, die ein erstes Schwingfrequenz-Signal $f_1$ an ihrem Ausgang abgibt; sie dient somit zur signalmäßigen Entkopplung, aber starren frequenzmäßigen Verkopplung der Signale s und $f_1$. Das Schwingfrequenz-Signal $f_1$ ist vorzugsweise ein Rechtecksignal mit einem Puls-Pausen-Verhältnis von eins.

An sich würde es genügen, eine reine Summierstufe oder nur eines der beiden Signale $u'_1$, $u'_2$ als Eingangssignal der Phasenregelschleife 17 vorzusehen, die Verwendung der Summier/Integrierstufe 16 hat jedoch einen zweifachen Vorteil: Einerseits werden durch die Integrierung wieder Störsignale, die aus der Rohrleitung oder aus dem strömenden Fluid stammen, gedämpft, und andererseits kann das Ausgangssignal der Summier/Integrierstufe 16 auch zur Ansteuerung einer Amplitudenregelschaltung dienen, durch die die mechanische Schwingungsamplitude der Meßrohre unabhängig von deren Schwingfrequenz konstant gehalten wird. Diese Amplitudenregelschaltung kann Teil der oben erwähnten Meßrohr-Treiberschaltung sein.

Dem ersten Eingang einer Phasenmeß- und Phasenaddierstufe 18 ist das erste Schwingfrequenz-Signal $f_1$ und deren zweitem Eingang das Ausgangssignal des Tiefpaßfilters 15 zugeführt. Die Phasenmeß- und Phasenaddierstufe 18 gibt an ihrem ersten Ausgang ein gegenüber ihrem Eingangssignal $f_1$ um die Phasenverschiebung $\delta\phi$ des Tiefpaß-filters 15 verschobenes zweites Schwingfrequenz-Signal $f_2$ und an ihrem zweiten Ausgang ein gegenüber $f_1$ um $\delta\phi$ + 90° verschobenes drittes Schwingfrequenz-Signal $f_3$ ab. Beide Schwingfrequenz-Signale sind vorzugsweise Rechtecksignale mit einem Puls-Pausen-Verhältnis von eins.

Das Ausgangssignal des Tiefpaßfilters 15 ist einem vom zweiten Schwingfrequenz-Signal $f_2$ getakteten ersten Syn-chrongleichrichter 51 zugeführt und dessen Ausgangssignal über einen Schalter 20 einem ersten Integrator 61.

Allgemein betrachtet ist ein Synchrongleichrichter ein Verstärker, dessen Verstärkung v von einem Steuersignal periodisch zwischen +v und -v umgeschaltet wird, oder mit anderen Worten: Ein Synchrongleichrichter ist ein Multiplizierer, dessen Multiplikator von einem Steuersignal periodisch zwischen +1 und -1 umgeschaltet wird.

Für das Verständnis der Erfindung sind nun zwei Grenzfälle des Betriebs von Synchrongleichrichtern wichtig, nämlich:

**Grenzfall 1** eines sinus-förmigen Eingangssignals der Frequenz F und eines phasengleichen Steuersignals mit derselben Frequenz F und mit einem Puls-Pausen-Verhältnis von eins (= **Grenzfall gleicher Phase**) bzw.

**Grenzfall 2** eines cosinus-förmigen Eingangssignals der Frequenz F, also eines Eingangssignals, das um 90° gegenüber dem sinus-förmigen Eingangssignal verschoben ist, jedoch für den Fall eines mit dem sinus-förmigen Eingangssignal phasengleichen Steuersignals mit derselben Frequenz F und mit einem Puls-Pausen-Verhältnis von eins (= **Grenzfall orthogonaler Phase**).

Im Grenzfall gleicher Phase hat der Synchrongleichrichter ein Ausgangssignal wie ein üblicher Vollweg- oder Brücken-Gleichrichter. Am Ausgang des dem Synchrongleichrichter 51 nachgeschalteten Integrators 61 entsteht somit praktisch eine Gleichspannung $g_1$.

Im Grenzfall orthogonaler Phase ergibt sich ein Ausgangssignal des Synchrongleichrichters, das aus aneinandergereihten Kurvenstücken des cosinus-förmigen Signals besteht, die jeweils mit dem Maximum des cosinus-förmigen Signals beginnen und mit dessen Minimum enden. Am Ausgang eines wiederum nachgeschalteten Integrators entsteht somit eine Gleichspannung, deren Wert gleich null ist.

Da, wie sich leicht zeigen läßt, für den Fall, daß die Amplituden $U''_1$, $U''_2$ der Ausgangssignale $u''_1$, $u''_2$ der beiden Verstärker 41, 42 voneinander verschieden sind, in der der Gleichung (4) entsprechenden Gleichung noch ein sinus-behafteter und von den beiden Amplituden $U''_1$, $U''_2$ abhängiger Term auftritt, ist das Ausgangssignal des ersten Integrators 61 praktisch eine Gleichspannung $g_1$, die bei Gleichheit dieser Amplituden zu null wird. Dann entfällt nämlich der sinus-behaftete Term, und der Cosinus-Term nach Gleichung (4) wird, wie oben für den Grenzfall orthogonaler Phase erläutert, ebenfalls zu null.

Die Gleichspannung $g_1$ ist einer Einstellstufe 19 für die Verstärkung des zweiten Verstärkers 42 zugeführt. Der Regelkreis aus den Teilschaltungen Verstärker 42, Differenzstufe 13, erster Umschalter 14, Tiefpaßfilter 15, Synchrongleichrichter 51, Schalter 20, Integrator 61 und Einstellstufe 19 wirkt somit als Automatic-Gain-Control-Kreis, wobei der Einstellstufe 19 ein geeignetes Referenzsignal zugeführt oder darin gebildet ist. Der Automatic-Gain-Control-Kreis regelt die Verstärkung des Verstärkers 42 so ein, daß, wie oben schon dargelegt wurde, die Amplituden der Ausgangssignale $u''_1$, $u''_2$ praktisch einander gleich sind.

Eine Ablaufsteuerung 23 erzeugt ein Signal a, das während einer Schließdauer $t_s$ den Schalter 20 und den Ausgang des Umschalters 14 mit dessen erstem Eingang außer während einer im Vergleich zur Schließdauer $t_s$ kurzen Meßdauer $t_m$ durchgeschaltet hält, während der der Ausgang des Umschalters 14 mit dessen zweitem Eingang durchgeschaltet ist. Ferner wird während der Meßdauer die Phasenmessung der Phasenmeß- und Phasenaddierstufe 18 aktiviert, so daß im Takt des Signals a die Phasenverschiebung $\delta\phi$ des Tiefpaßfilters 15 aktualisiert wird.

Das Ausgangssignal des Tiefpaßfilters 15 ist ferner über einen zweiten Umschalter 24 einem vom zweiten oder vom dritten Schwingfrequenz-Signal $f_2$, $f_3$ getakteten zweiten Synchrongleichrichter 52 zugeführt, und zwar wird der zweite Synchrongleichrichter 52 während der Schließdauer $t_s$ vom dritten bzw. während der Meßdauer $t_m$ vom zweiten Schwingfrequenz-Signal getaktet.

Dem zweiten Synchrongleichrichter 52 ist ein zweiter Integrator 62 nachgeschaltet, der jeweils über mindestens eine volle Periode des Signals $f_2$ bzw. $f_3$ integriert. Somit ergibt sich eine Gleichspannung $g_2$, die streng proportional der Amplitude des Eingangssignals ist.

Da das Tiefpaßfilter 15 während der Schließdauer $t_s$ das Signal d verarbeitet, das nach Gleichung (5) ein Cosinus-Signal ist, und da der zweite Synchrongleichrichter 52 während der Schließdauer $t_s$ vom dritten Schwingfrequenz-Signal $f_3$ getaktet wird, das ein um $\delta\phi$ verschobenes Cosinus-Signal ist (vgl. dessen obige Definition), liegt somit der erwähnte Grenzfall gleicher Phase vor. Am Ausgang des zweiten Integrators 62 wird daher die der Amplitude $U'''_\phi$ nach Gleichung (5) proportionale Gleichspannung $g_2$ gebildet.

Da das Tiefpaßfilter 15 andererseits während der Meßdauer $t_m$ das Signal $u''_1$ verarbeitet, das nach Gleichung (1) ein Sinus-Signal ist, und da der zweite Synchrongleichrichter 52 während der Meßdauer $t_m$ vom zweiten Schwingfrequenz-Signal $f_2$ getaktet wird, das ein um $\delta\phi$ verschobenes Sinus-Signal ist, liegt wieder der Grenzfall gleicher Phase vor. Am Ausgang des zweiten Integrators 62 wird daher eine der Amplitude $u''_1$ proportionale Gleichspannung $g_2'$ gebildet, die somit ein Maß für die Schwingungsamplitude des Meßrohrs 12 ist.

Durch die Taktung mit den beiden Signalen $f_2$, $f_3$, die ja um 90° gegeneinander verschoben sind, werden im Ausgangssignal des Tiefpaßfilters 15 enthaltene, um 90° versetzte Komponenten außerdem sicher unterdrückt.

Wenn die beiden Umschalter 14, 24 und der Schalter 20 mittels elektronischer Komponenten realisiert sind, erzeugt die Ablaufsteuerung 23 also ein Signal a, z.B. eine Spannung, mit einem der Schließdauer $t_s$ entsprechenden, zur jeweiligen Durchsteuerung der beiden Umschalter 14, 24 und des Schalters 20 ausreichenden, z.B. positiveren, ersten Pegel H. Nur während der kurzen Meßdauer $t_m$ hat das Signal a einen zum Umsteuern der Umschalter 14, 24 in seine andere Stellung und zum Sperren von Schalter 20 ausreichenden, z.B. negativeren, zweiten Pegel L. Die Schließdauer $t_s$ beträgt z.B. 2 s und die Meßdauer $t_m$ z.B. 20 µs.

Der Eingang einer Speicherstufe 25 ist höchstens während der Meßdauer $t_m$ mit dem Ausgang des zweiten Integrators 62 verbunden. Da, wie erläutert, dann die Gleichspannung $g_2$ am Eingang liegt, wird deren Wert, also sozusagen die Schwingungsamplitude des Meßrohrs 12, von der Speicherstufe 25 gespeichert.

Schließlich wird in einer Dividierstufe 26 während eines Teils der Schließdauer $t_s$ deren Dividend-Eingang mit dem Ausgang des zweiten Integrators 62 und deren erster Divisor-Eingang mit dem Ausgang der Speicherstufe 25 sowie deren zweiter Divisor-Eingang mit dem Ausgang der Phasenregelschleife 17 verbunden. Der zweite Divisor-Eingang wertet lediglich die Frequenzinformation aus, was z.B. dadurch realisiert werden kann, daß ein Frequenz-Spannungs-Wandler vorhanden ist.

Das Ausgangssignal der Dividierstufe 26 ist somit dem Massedurchfluß m proportional.

In Weiterbildung der Erfindung kann auch eine Meßstufe 27 zur Bestimmung der Dichte des Fluids vorgesehen sein, deren Eingang das erste oder das zweite Schwingfrequenz-Signal $f_1$, $f_2$ zugeführt ist. Bekanntlich kann aus der Schwingfrequenz f der Meßrohre die Dichte des Fluids bestimmt werden, und die Signale $f_1$, $f_2$ haben, wie erläutert, dieselbe Frequenz.

Für den Fall, daß die Speicherstufe 25 und die Dividierstufe 26 als Digitalschaltungen realisiert werden sollen, z.B. dadurch, daß sie Teil eines Mikroprozessors sind, muß dem Ausgang des zweiten Integrators 62 ein Analog/Digital-Wandler 28 direkt nachgeschaltet werden; dies ist in der Figur gestrichelt gezeichnet. Dieser Mikroprozessor kann selbstverständlich auch die Funktion von noch weiteren Teilschaltungen übernehmen, wie z.B. die des erwähnten Frequenz-Spannungs-Wandlers.

**Patentansprüche**

1. Auswerte-Elektronik eines nach dem Coriolis-Prinzip arbeitenden Massedurchflußaufnehmers mit einem auf einer Schwingfrequenz (f) schwingenden ersten Meßrohr (11) und mit einem auf derselben Schwingfrequenz schwingenden zweiten Meßrohr (12), durch welche Meßrohre ein zu messendes Fluid strömt und an mindestens einem von welchen Meßrohren ein erster elektrodynamischer Sensor (21) und ein zweiter elektrodynamischer Sensor (22) in Richtung der Strömung des Fluids versetzt angeordnet sind, welche Auswerte-Elektronik umfaßt:

   - einen ersten Vorverstärker (31) für das Signal des ersten Sensors (21),
   - einen zweiten Vorverstärker (32) für das Signal des zweiten Sensors (22),
   - einen ersten Verstärker (41) mit fest eingestellter Verstärkung für das Ausgangssignal des ersten Vorverstärkers (31),
   - einen zweiten Verstärker (42) mit variabler Verstärkung für das Ausgangssignal des zweiten Vorverstärkers (32),
   - eine Differenzstufe (13) für die Ausgangssignale der beiden Verstärker (41, 42),
   - einen ersten Umschalter (14),

     -- dessen erster Eingang am Ausgang der Differenzstufe (13) und
     -- dessen zweiter Eingang am Ausgang des ersten Verstärkers (41) liegt,

   - ein Tiefpaßfilter (15) mit einstellbarer Grenzfrequenz,

     -- dessen Abfall seines Übertragungsfaktors bei der Schwingfrequenz (f) der Meßrohre beginnt und
     -- dessen Eingang am Ausgang des ersten Umschalters (14) liegt,

   - eine Summier/Integrierstufe (16) für die Ausgangssignale der beiden Vorverstärker (31, 32),
   - eine Phasenregelschleife (17),

     -- deren Eingang mit dem Ausgang der Summier/Integrierstufe (16) verbunden und
     -- deren Ausgangssignal ein erstes Schwingfrequenz-Signal ($f_1$) ist,

   - eine Phasenmeß- und Phasenaddierstufe (18),

     -- deren erstem Eingang das erste Schwingfrequenz-Signal ($f_1$) und
     -- deren zweitem Eingang das Ausgangssignal des Tiefpaßfilters (15) zugeführt ist sowie
     -- an dessen erstem Ausgang ein um die Phasenverschiebung ($\delta\phi$) des Tiefpaßfilters (15) verschobenes zweites Schwingfrequenz-Signal ($f_2$) und
     -- an dessen zweitem Ausgang ein um diese Phasenverschiebung ($\delta\phi$) plus 90° verschobenes drittes Schwingfrequenz-Signal ($f_3$) auftritt,

- einen vom zweiten Schwingfrequenz-Signal ($f_2$) getakteten ersten Synchrongleichrichter (51), dem das Ausgangssignals des Tiefpaßfilters (15) zugeführt ist,
- einen Schalter (20), dessen Eingang am Ausgang des ersten Synchrongleichrichters (51) liegt,
- eine Einstellstufe (19) der Verstärkung des zweiten Verstärkers (42), deren Eingang über einen ersten Integrator (61) mit dem Ausgang des Schalters (20) verbunden ist,
- eine Ablaufsteuerung (23), die während einer Schließdauer ($t_s$) den Schalter (20) bzw. den Ausgang des Umschalters (14) mit dessen erstem Eingang außer während einer im Vergleich zur Schließdauer ($t_s$) kurzen Meßdauer ($t_m$) durchgeschaltet hält und während der Meßdauer die Phasenmessung der Phasenmeß- und Phasenaddierstufe (18) aktiviert,
- einen während der Meßdauer ($t_m$) vom zweiten bzw. während der Schließdauer ($t_s$) der vom dritten Schwingfrequenz-Signal ($f_2$, $f_3$) getakteten zweiten Synchrongleichrichter (52), dem das Ausgangssignals des Tiefpaßfilters (15) zugeführt ist,
- einen zweiten Integrator (62), dessen Eingang mit dem Ausgang des zweiten Synchrongleichrichters (52) verbunden ist,
- eine Speicherstufe (25), deren Eingang höchstens während der Meßdauer ($t_m$) mit dem Ausgang des zweiten Integrators (62) verbunden ist, und
- eine Dividierstufe (26),

    -- bei der während der Schließdauer ($t_s$)

        --- der Dividend-Eingang mit dem Ausgang des zweiten Integrators (62),
        --- der erste Divisor-Eingang mit dem Ausgang der Speicherstufe (25) und
        --- der zweite Divisor-Eingang mit dem Ausgang der Phasenregelschleife (17) verbunden ist und

    -- deren Ausgangssignal dem Massedurchfluß (m) proportional ist.

2. Auswerte-Elektronik nach Anspruch 1 mit einem Switched-Capacitor-Tiefpaßfilter, dessen Taktsignal von der Phasenregelschleife (17) erzeugt ist und dessen Taktfrequenz ($f^*$) ein ganzzahliges Vielfaches der Schwingfrequenz (f) ist.

3. Auswerte-Elektronik nach Anspruch 1 mit einer Meßstufe (27) der Dichte des Fluids, deren Eingang das erste oder das zweite Schwingfrequenz-Signal ($f_1$, $f_2$) zugeführt ist.

4. Auswerte-Elektronik nach Anspruch 1, bei der dem Ausgang des zweiten Integrators (62) ein Analog/Digital-Wandler (28) direkt nachgeschaltet ist und die Speicherstufe (25) sowie die Dividierstufe (26) Digitalschaltungen sind.

| | Europäisches Patentamt | EUROPÄISCHER RECHERCHENBERICHT | Nummer der Anmeldung EP 94 11 2759 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 375 300 (SCHLUMBERGER) * Spalte 2, Zeile 8 - Spalte 3, Zeile 20; Abbildung 1 * --- | 1 | G01F1/84 |
| A | PATENT ABSTRACTS OF JAPAN vol. 17, no. 357 (P-1568) 6. Juli 1993 & JP-A-05 052 630 (YOKOGAWA) * Zusammenfassung * --- | 1 | |
| A | WO-A-93 03336 (MICRO MOTION) * Seite 17, Zeile 8 - Seite 22, Zeile 20; Abbildungen 5,6 * --- | 1 | |
| A | EP-A-0 300 301 (EXAC CORPORATION) * das ganze Dokument * --- | 1 | |
| D,A | AUTOMATISIERUNGSTECHNISCHE PRAXIS - ATP., Bd.30, Nr.5, 1988, MUNCHEN DE Seiten 224 - 230 E.AMBERGER ET AL. 'Unmittelbare Messung des Massedurchflusses mit Hilfe der Coriolis-Kraft' * Seite 230, linke Spalte, Absatz 3 - rechte Spalte, Absatz 2; Abbildung 12 * ----- | 1 | RECHERCHIERTE SACHGEBIETE (Int.Cl.6) G01F |

Der vorliegende Recherchenbericht wurde für alle Patentansprüche erstellt

| Recherchenort | Abschlußdatum der Recherche | Prüfer |
|---|---|---|
| DEN HAAG | 20. Januar 1995 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes Dokument

EPO FORM 1503 03.82 (P04C03)